# EUROPÄISCHE PATENTSCHRIFT

(11) **EP 2 438 459 B1**
(45) Veröffentlichungstag und Bekanntmachung des Hinweises auf die Patenterteilung: **14.09.2016**
(21) Anmeldenummer: 10713690.5
(22) Anmeldetag: 19.04.2010
(51) Int. Cl.: G01S 7/03, H01L 21/48, H05K 3/02, H03D 1/04

(54) **RADARSENSOR MIT STÖRSIGNALKOMPENSATION**
RADAR SENSOR WITH INTERFERENCE SIGNAL COMPENSATION
CAPTEUR RADAR AVEC COMPENSATION DU SIGNAL PERTURBATEUR

(30) Priorität: 05.06.2009 DE 102009026767
(43) Veröffentlichungstag der Anmeldung: 11.04.2012
(73) Patentinhaber: Robert Bosch GmbH, 70442 Stuttgart (DE)
(72) Erfinder: HIMMELSTOSS, Armin, 71554 Weissach Im Tal (DE); KLAR, Michael, 71106 Magstadt (DE); FORSTNER, Hans-Peter, 85643 Steinhoering (DE); BINZER, Thomas, 70565 Stuttgart (DE); WALTER, Thomas, Renningen 71272 (DE); MIOSGA, Klaus-Dieter, 71522 Backnang (DE); BRUEGGEMANN, Oliver, 75248 Oelbronn-Duerrn (DE); FISCHER, Alexander, A-4020 Linz (AT); HAUK, Joachim, 71272 Renningen-Malmsheim (DE); STEINBUCH, Dirk, 71299 Wimsheim (DE); JAEGER, Herbert, 4040 Linz (DE); KOLMHOFER, Erich, A-4040 Linz (AT); SEIZ, Juergen, 73642 Welzheim (DE)
(86) Internationale Anmeldenummer: PCT/EP2010/055083
(87) Internationale Veröffentlichungsnummer: WO 2010/149405

(56) Entgegenhaltungen:
- EP-A2- 0 622 840
- DE-A1-102005 030 345
- US-A- 3 339 197

## Beschreibung

### Stand der Technik

Die Erfindung betrifft einen Radarsensor mit einem Mischer zum mischen eines Empfangssignals mit einem Referenzsignal, und mit einer Einrichtung zur Kompensation von Störsignalen, die den Mischer übersteuern würden, wobei die Einrichtung zur Kompensation der Störsignale eine Reflexionsstelle am Referenzeingang des Mischers aufweist.

Ein Radarsensor dieser Art ist aus US 3 339 197 A bekannt.

EP 0 622 840 A2 zeigt das Anpassen von zusammengeschalteten HF-MMICs in der Herstellung durch Laser-Trimmen von Stichleitungen oder anderen Anpassnetzwerken.

DE 10 2005 030345 A1 zeigt das Einstellen des optimalen Arbeitspunktes eines Mischers durch Laser-Trimmen von Dünnfilm-Widerständen im Bias-Netzwerk.

Radarsensoren werden z. B. als Abstandssensoren in Kraftfahrzeugen eingesetzt. Die ersten Implementierungen bedienten sich diskreter Halbleiter-Bauelemente, um die Hochfrequenz bei 77 GHz zu erzeugen bzw. in auswertbare Signale umzuwandeln. Seit einigen Jahren haben sogenannte MMICs (Microwave Monolithic Integrated Circuit) Einzug gehalten. Diese zeichnen sich dadurch aus, daß HF-Schaltungen auf einem Chip platzsparend integriert sind.

Als neuartige Technologie-Plattform bietet sich SiGe (Silizium-Germanium) als HF-Halbleitermaterial an, das mittlerweile für den Automobileinsatz qualifiziert ist und das Potential der Hochintegration von HF-Schaltungstechnik bietet. Insbesondere ist es hier erstmals sinnvoll, aktive Mischer einzusetzen statt, wie bisher üblich, passive Mischer in Form von diskreten oder in einen MMIC integrierten Dioden zu implementieren.

Während passive Mischer einen Konversionsverlust besitzen, weisen aktive Mischer durch deren Verstärkung einen Konversionsgewinn auf. Dadurch sind aktive Mischer bei hohen Eingangssignalen anfälliger für Übersteuerung, was eine starke Beeinträchtigung der Mischereffizienz bewirkt. Dem wird entgegengewirkt, indem die Mischerzellen durch besondere Schaltungstechnik großsignalfester gemacht werden, was jedoch den Stromverbrauch erhöht. Dennoch tritt der Fall auf, daß bei starken und nahen Reflexionen die Sendeleistung nur gering gedämpft in den Empfangspfad zurückreflektiert wird und aufgrund der hohen Absolutleistung den Empfänger in Sättigung bringt.

Da dieser Effekt typischerweise bei kurzen Distanzen an stationären Reflexionsstellen auftritt, weisen Sende- und Empfangssignal praktisch keine Frequenzverschiebung auf, womit sich als Mischprodukt eine Gleichspannung ergibt, im Folgenden "DC-Offset" genannt. Zwar kann diese Gleichspannung durch Wechselspannungskopplung am Mischerausgang eliminiert werden, doch führt sie dennoch in der Mischerzelle selbst zur Übersteuerung und Beeinträchtigung der Effizienz.

Insbesondere bei kompakten Radarsystemen, die sich für den Sende- und den Empfangsfall einer gemeinsamen Antenne bedienen und einen gemeinsamen Sende- und Empfangspfad besitzen (Monostatische Radars), sind diese Reflexionen besonders ausgeprägt und sorgen bei nicht optimaler Auslegung für eine stark eingeschränkte Leistungsfähigkeit.

Bei heutigen Automobilradars wird deshalb zunehmend auf bistatische Radar-Architekturen ausgewichen, womit direkte Rückreflexion innerhalb des gemeinsamen Sende- und Empfangspfades vermieden wird. Allerdings sind auch hier bei nahen und starken Reflexionen, beispielsweise durch Verbau der Radars hinter reflektierenden Stoßfängern, die Probleme nicht völlig beseitigt. Außerdem ist es insbesondere bei stark bündelnden Antennen mit großer Apertur unvorteilhaft, die Antennenfläche durch die bistatische Auslegung zu verdoppeln.

Weiterhin ist es bekannt, das Problem durch geringere Sendeleistung zu reduzieren. Jedoch ist eine geringere Sendeleistung mit geringerer Reichweite verbunden, was ebenso unerwünscht ist.

In Kommunikationssystemen ist es bekannt, daß aktive Offsetregelungen durch Rückkopplung die Übersteuerung verhindern. Das ist bisher jedoch nur bei wesentlich niedrigeren Frequenzen realisiert und derzeit bei 77 GHz nicht wirtschaftlich umsetzbar.

Ebenso ist es bekannt, einen Sende-/Empfangsumschalter vor der Antenne zu anzuordnen. Allerdings ist auch diese Technik bisher weitaus tieferen Frequenzen vorbehalten und bewirkt zudem einen Anstieg an Komplexität, der bei einem wirtschaftlich herzustellenden Radarsensor für Kraftfahrzeuge nicht tragbar ist.

### Offenbarung der Erfindung

Aufgabe der Erfindung ist es, einen Radarsensor zu schaffen, insbesondere für Kraftfahrzeuge, bei dem sich zur Sättigung des Mischers führende Störsignale einfach und wirksam unterdrücken lassen.

Diese Aufgabe wird erfindungsgemäß mit den in Anspruch 1 angegebenen Merkmalen gelöst.

Die Erfindung nutzt die Tatsache aus, daß in einem Mischer eines Radarsensors und in dessen Umgebung verschiedene Arten von Reflexionen stattfinden und die auf diesen verschiedenen Arten von Reflexionen beruhenden Signale am Mischer miteinander interferieren. Mit Hilfe der einstellbaren Reflexionsstelle läßt sich nun die Phase und die Amplitude mindestens eines dieser Signale so einstellen, daß destruktive Interferenz eintritt und somit das resultierende Störsignal unterdrückt wird.

Vorteilhafte Ausgestaltungen und Weiterbildungen der Erfindung sind in den Unteransprüchen angegeben.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: eine Prinzipskizze einer Mischerbaugruppe eines Radarsensors;
- Fig. 2: eine schematische Darstellung verschiedener Arten von Reflexionen, die in der Mischerbaugruppe nach Fig. 1 auftreten;
- Fig. 3: eine Mischerbaugruppe mit einer einstellbaren Reflexionsstelle gemäß der Erfindung; und
- Fig. 4: eine detailliertere Darstellung der Reflexionsstelle nach Fig. 3.

### Ausführungsform der Erfindung

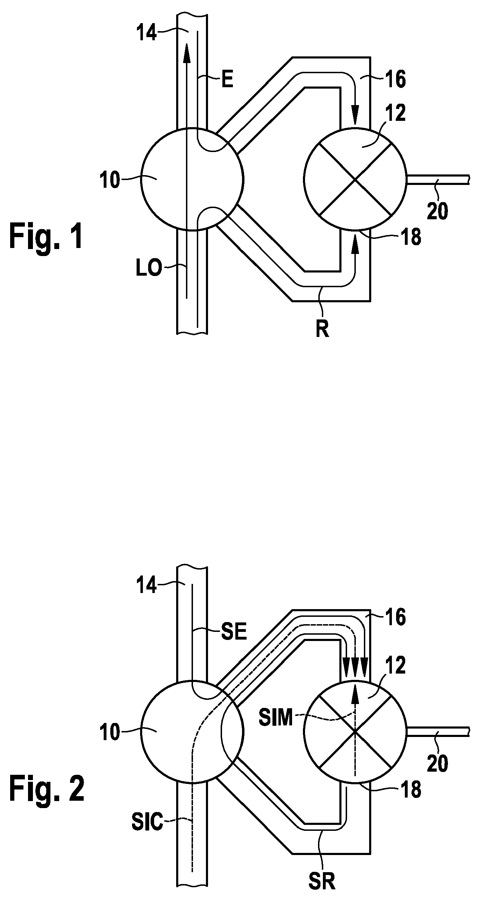

In Fig. 1 ist als Prinzipskizze eine Mischerbaugruppe eines monostatischen Radarsensors für Kraftfahrzeuge dargestellt, beispielsweise eines 77 GHz Radars. Wesentliche Funktionskomponenten der Mischerbaugruppe sind ein Koppler 10 und die eigentliche Mischerzelle 12. Die Funktionen dieser beiden Komponenten können, beispielsweise bei einem Transfermischer, auch in einem einzigen Bauelement vereinigt sein, was jedoch für die hier zu erläuternden Prinzipien nicht weiter von Bedeutung ist. Der Koppler 10 ist in eine Hochfrequenzleitung 14 geschaltet, die von einem nicht gezeigten lokalen Oszillator zu einer gleichfalls nicht gezeigten Antenne des Radarsensors führt.

Ein von dem lokalen Oszillator erzeugtes Sendesignal LO (77 GHz Hochfrequenzsignal) wird über die Hochfrequenzleitung 14 an die Antenne übermittelt und von dieser Antenne abgestrahlt. Das an einem zu ortenden Objekt reflektierte Signal wird von derselben Antenne wieder empfangen und als Empfangssignal E über die Hochfrequenzleitung 14 zurück zum Koppler 10 übertragen. Durch den Koppler 10 wird dieses Empfangssignal E aus der Hochfrequenzleitung 14 ausgekoppelt und an einen HF-Eingang 16 der Mischerzelle 12 weitergeleitet. Weiterhin wird vom Koppler 10 ein Teil des Sendesignals LO ausgekoppelt und als Referenzsignal R an einen Referenzeingang 18 der Mischerzelle 12 weitergeleitet. In der Mischerzelle 12 werden das Empfangssignal E und das Referenzsignal R miteinander gemischt, so daß man ein Zwischenfrequenzsignal erhält, dessen Frequenz dem Frequenzunterschied zwischen dem Empfangssignal E und dem Referenzsignal R entspricht. Dieses Zwischenfrequenzsignal wird an einem ZF-Ausgang 20 des Mischers abgegriffen und der weiteren Auswertung zugeführt.

Fig 2 ist eine Prinzipskizze der gleichen Mischerbaugruppe wie in Fig, 1, zeigt jedoch anstelle der oben beschriebenen Signale LO, E und R verschiedene Störsignale, die durch unterschiedliche Arten von Reflexionen in der Mischerbaugruppe selbst und/oder in deren Umgebung entstehen. Als Beispiel kann angenommen werden, daß die Mischerbaugruppe durch ein MMIC gebildet wird. In diesem Fall kann man unterscheiden zwischen internen Reflexionen innerhalb des MMIC und Reflexionen, die durch den Einbau des MMIC in seine Umgebung verursacht werden.

Auf diese letztere Weise entsteht insbesondere ein einbaubedingtes Störsignal SE, das durch reflektierende Stoßstellen im oder am antennenseitigen Ast der Hochfrequenzleitung 14 und/oder durch den HF-Übergang zwischen diesem Ast der Hochfrequenzleitung und dem MMIC verursacht wird. Der HF-Übergang kann als Bond-Übergang oder als Flip-Chip ausgebildet sein. Das empfangsbedingte Störsignal SE gelangt über den Koppler 10 an den HF-Eingang 16 der Mischerzelle.

Ein internes Störsignal SR entsteht durch Reflexion am Referenzeingang 18 der Mischerzelle 12 und gelangt über den Koppler 10 ebenfalls an den HF-Eingang 16 der Mischerzelle.

Weitere Störsignale SIC und SIM, die jedoch in der Praxis weniger bedeutsam sind, entstehen durch unvollkommene Isolation des Kopplers 10 bzw. unvollkommene Isolation zwischen dem Referenzeingang und dem HF-Eingang der Mischerzelle 12.

All diese Störsignale werden am HF-Eingang der Mischerzelle 12 vektoriell miteinander überlagert und kommen so zur Interferenz.

Die internen Störsignale SR, SIC und SIM sind im Prinzip durch geeignete Auslegung des MMICs, das die Mischerbaugruppe bildet, kontrollierbar. Das gilt jedoch nicht für das externe Störsignal SE, das jeweils von den speziellen Einbaubedingungen der Mischerbaugruppe im Gesamtsystem des Radarsensors abhängig ist.

Von Fall zu Fall kann sich daher nach dem Einbau des MMICs in den Radarsensor zeigen, daß die Störsignale am HF-Eingang 16 der Mischerzelle 12 vorwiegend konstruktiv interferieren und eine Amplitude erreichen, die die Mischerzelle zur Sättigung bringt und so die Effizienz des Mischers erheblich beeinträchtigt.

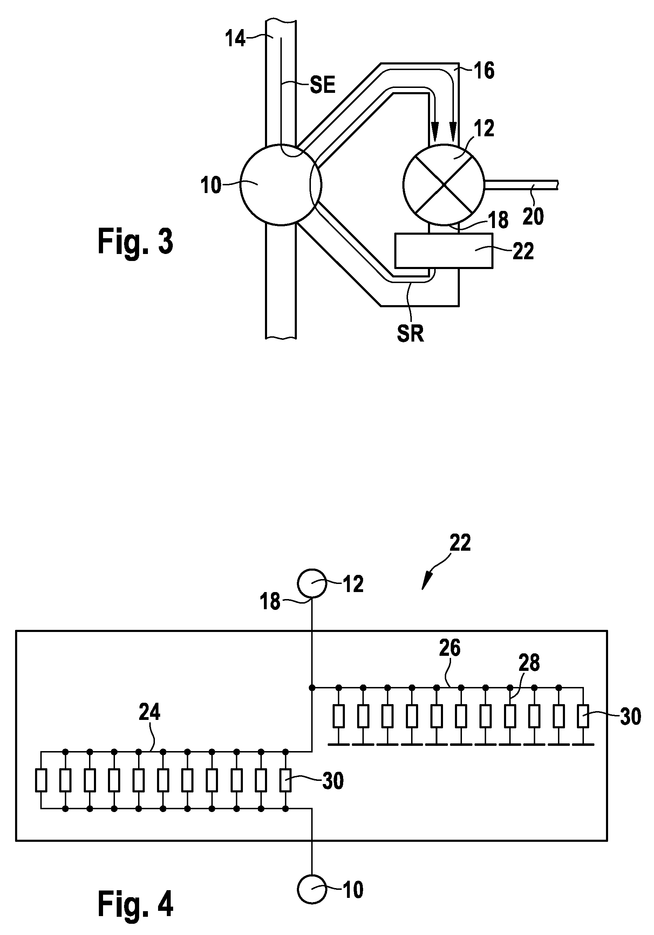

Fig. 3 zeigt nun - wiederum als Prinzipskizze - eine Mischerbaugruppe, bei der sich die durch die Störsignale verursachte Funktionsbeeinträchtigung nachträglich, nach dem Einbau des MMICs in den Radarsensor, korrigieren läßt.

Zu diesem Zweck ist am Referenzeingang 18 der Mischerzelle 12 eine einstellbare Reflexionsstelle 22 vorgesehen, mit der sich die Phase und die Amplitude des Störsignals SR verändern lassen. Diese Phase und Amplitude werden nun so eingestellt, daß sich am HF-Eingang 16 destruktive Interferenz mit der Resultierenden der übrigen Störsignale ergibt. Die weniger bedeutenden Störsignale SIC und SIM sind in Fig. 3 der Einfachheit halber fortgelassen.

Eine praktische Realisierung der einstellbaren Reflexionsstelle 22 ist in Fig. 4 dargestellt. Danach umfaßt diese Reflexionsstelle mehrere parallele Umwegleitungen 24, die alle den Koppler 10 mit dem Referenzeingang 18 der Mischerzelle 12 verbinden, jedoch unterschiedlich weitere Umwege repräsentieren. Weiterhin umfaßt die Reflexionsstelle 22 eine Stichleitung 26 mit mehreren Zweigen 28, die den Referenzeingang 18 über unterschiedlich lange Leitungsstrecken mit Masse verbinden.

Jede Umgehungsleitung 24 und jeder Zweig 28 der Stichleitung 26 enthält eine Unterbrechungsstelle 30, beispielsweise in der Form sogenannter Laser-Fuses, die sich nach dem Einbau der Mischerbaugruppe in den Radarsensor mit Hilfe eines Lasers wegbrennen lassen, so daß der betreffende Leitungszweig unterbrochen wird.

Durch Öffnen einer oder mehrerer der Unterbrechungsstellen 30 läßt sich somit die effektive Länge der Umgehungsleitung 24 bzw. der Stichleitung 26 einstellen. Die effektive Länge der Umgehungsleitung 24 bestimmt die Phase des Störsignals SR, während die effektive Länge der Stichleitung 26 die Amplitude dieses Störsignals beeinflußt.

Wenn nach dem Einbau der Mischerbaugruppe in den Radarsensor das Sendesignal LO eingespeist wird und dabei die Leistung der Mischerbaugruppe, speziell die Neigung zum Übersteuern ausgewertet wird (z. B. anhand des DC-Offsets am ZF-Ausgang 20), läßt sich die Störsigalunterdrückung optimieren, indem nacheinander die Unterbrechungsstellen 30 in den Umwegleitungen 24 und der Stichleitung 26 geöffnet werden. Beispielsweise werden zunächst die Unterbrechungsstellen 30 der Umgehungsleitungen 24 nacheinander geöffnet, so daß die effektive Länge der Umgehungsleitung nach und nach größer (oder kleiner) wird und somit die Phase des Störsignals SR allmählich gedreht wird. Dieser Vorgang wird so lange fortgesetzt, bis die Übersteuerung ein Minimum erreicht, d.h., bis die Phase des Störsignals SR gegenüber der Phase der übrigen Störsignale, insbesondere des Störsignals SE, um 180° verschoben ist.

Anschließend werden der Reihe nach die Unterbrechungsstellen 30 in der Stichleitung 26 durchgetrennt, und damit wird die Amplitude des Störsignals SR nach und nach vergrößert (oder verkleinert), bis auch die Amplituden abgeglichen sind und somit ein endgültiges Optimum, im Idealfall eine vollständige destruktive Interferenz erreicht wird.

Dieses Prinzip ist nicht auf monostatische Systeme mit Transfermischern beschränkt, sondern kann beispielsweise auch bei bistatischen Systemen eingesetzt werden, bei denen eine Überkopplung des Empfangssignals mit dem Sendesignal stattfindet. Das gilt beispielsweise bei bistatischen Radarsensoren mit Überkopplung von der Sendeauf die Empfangsantenne, insbesondere dann, wenn der Empfänger durch den Einsatz eines LNA (Low Noise Amplifier) im Empfangspfad sehr empfindlich ist und/oder der Mischer nur wenig großsignalfest ausgelegt ist

## Patentansprüche

1. Radarsensor mit einem Mischer (12) zum Mischen eines Empfangssignals (E) mit einem Referenzsignal (R), und mit einer Einrichtung zur Kompensation von Störsignalen (SE), die den Mischer übersteuern würden, wobei die Einrichtung zur Kompensation der Störsignale eine Reflexionsstelle (22) am Referenzeingang (18) des Mischers (12) aufweist **dadurch gekennzeichnet, daß** die Reflexionsstelle (22) eine Umwegleitung (24) aufweist, die dadurch einstellbar ist, daß sie mehrere parallele, unterschiedlich lange Pfade aufweist, die jeweils eine Unterbrechungsstelle (30) aufweisen, die sich öffnen lässt, während ein Sendesignal (LO) eingespeist und die Neigung des Mischers zum Übersteuern ausgewertet wird.

2. Radarsensor nach Anspruch 1, bei dem die Reflexionsstelle (22) eine Stichleitung (26) aufweist, die den Referenzeingang (18) des Mischers (12) mit Masse verbindet und dadurch einstellbar ist, daß sie mehrere Pfade (28) unterschiedlicher Länge aufweist, die jeweils eine Unterbrechungsstelle (30) aufweisen, die sich öffnen lässt, während ein Sendesignal (LO) eingespeist und die Neigung des Mischers zum Übersteuern ausgewertet wird.

3. Radarsensor nach Anspruch 1 oder 2, bei dem die Unterbrechungsstelle (30) eine Laser-Fuse ist.

4. Radarsensor nach einem der vorstehenden Ansprüche, bei dem der Mischer (12) Teil eines MMIC ist.

5. Radarsensor nach einem der vorstehenden Ansprüche, bei dem der Mischer (12) ein Transfermischer ist.

6. Radarsensor nach einem der vorstehenden Ansprüche, bei dem der Mischer (12) ein aktiver Mischer ist.

7. Radarsensor nach einem der vorstehenden Ansprüche in monostatischer Bauweise.

## Claims

1. Radar sensor having a mixer (12) for mixing a received signal (E) with a reference signal (R), and having a device for compensating for interference signals (SE) that would overdrive the mixer, wherein the device for compensating for the interference signals has a reflection point (22) at the reference input (18) of the mixer (12), **characterized in that** the reflection point (22) has a bypass line (24) that is adjustable by virtue of its having multiple parallel paths of different length that each have an interruption point (30) that can be opened while a transmission signal (LO) is fed in and the inclination of the mixer toward overdriving is evaluated.

2. Radar sensor according to Claim 1, in which the reflection point (22) has a spur line (26) that connects the reference input (18) of the mixer (12) to earth and is adjustable by virtue of its having multiple paths (28) of different length that each have an interruption point (30) that can be opened while a transmission signal (LO) is fed in and the inclination of the mixer toward overdriving is evaluated.

3. Radar sensor according to Claim 1 or 2, in which the interruption point (30) is a laser fuse.

4. Radar sensor according to one of the preceding claims, in which the mixer (12) is part of an MMIC.

5. Radar sensor according to one of the preceding claims, in which the mixer (12) is a transfer mixer.

6. Radar sensor according to one of the preceding claims, in which the mixer (12) is an active mixer.

7. Radar sensor according to one of the preceding claims, in a monostatic design.

## Revendications

1. Capteur radar comprenant un mélangeur (12) pour mélanger un signal de réception (E) avec un signal de référence (R), comprenant un dispositif pour compenser les signaux perturbateurs (SE) qui satureraient le mélangeur, le dispositif de compensation des signaux perturbateurs présentant une zone de réflexion (22) au niveau de l'entrée de référence (18) du mélangeur (12), **caractérisé en ce que** la zone de réflexion (22) présente une ligne de dérivation (24) qui peut être ajustée par le fait qu'elle présente plusieurs voies parallèles de longueurs différentes, qui présentent chacune une zone d'interruption (30) qui peut être ouverte pendant qu'un signal d'émission (LO) est injecté et que la tendance du mélangeur à saturer est analysée.

2. Capteur radar selon la revendication 1, dans lequel la zone de réflexion (22) présente une ligne de branchement (26) qui relie l'entrée de référence (18) du mélangeur (12) à la masse et qui peut être ajustée par le fait qu'elle présente plusieurs voies (28) de longueurs différentes qui présentent chacune une zone d'interruption (30) qui peut être ouverte pendant qu'un signal d'émission (LO) est injecté et que la tendance du mélangeur à saturer est analysée.

3. Capteur radar selon la revendication 1 ou 2, dans lequel la zone d'interruption (30) est un fusible laser.

4. Capteur radar selon l'une quelconque des revendications précédentes, dans lequel le mélangeur (12) fait partie d'un MMIC.

5. Capteur radar selon l'une quelconque des revendications précédentes, dans lequel le mélangeur (12) est un mélangeur de transfert.

6. Capteur radar selon l'une quelconque des revendications précédentes, dans lequel le mélangeur (12) est un mélangeur actif.

7. Capteur radar selon l'une quelconque des revendications précédentes, de construction monostatique.
